Europäisches Patentamt

European Patent Office

Office européen des brevets

(11) Veröffentlichungsnummer: **0 462 981 B1**

(12) **EUROPÄISCHE PATENTSCHRIFT**

(45) Veröffentlichungstag der Patentschrift: **04.05.94**

(21) Anmeldenummer: **90903014.0**

(22) Anmeldetag: **21.02.90**

(86) Internationale Anmeldenummer:
**PCT/EP90/00283**

(87) Internationale Veröffentlichungsnummer:
**WO 90/10678 (20.09.90 90/22)**

(51) Int. Cl.⁵: **C09D  167/00,** C09D 163/00,
C09D 133/00, C09D 123/00

(54) **BESCHICHTUNGSMASSE, VERFAHREN ZU IHRER HERSTELLUNG SOWIE DIE VERWENDUNG DER BESCHICHTUNGSMASSE, INSBESONDERE ZUR AUSSENLACKIERUNG VON TIEFGEZOGENEN DOSEN.**

(30) Priorität: **13.03.89 DE 3908104**

(43) Veröffentlichungstag der Anmeldung:
**02.01.92 Patentblatt  92/01**

(45) Bekanntmachung des Hinweises auf die
Patenterteilung:
**04.05.94 Patentblatt  94/18**

(84) Benannte Vertragsstaaten:
**AT BE CH DE DK ES FR GB IT LI NL SE**

(56) Entgegenhaltungen:
**EP-A- 0 330 887**
**DE-A- 2 352 774**
**DE-A- 2 602 571**
**DE-A- 3 227 287**

**DERWENT'S ABSTRACT, Nr. 86-57 700/09, HU
T37 640, publ. Woche 8609**

(73) Patentinhaber: **BASF Lacke + Farben AG**
**Glasuritstrasse 1**
**D-48165 Münster-Hiltrup(DE)**

(72) Erfinder: **KEWELOH, Ludger**
**Elmsterberg 6**
**D-4415 Sendenhorst(DE)**
Erfinder: **KÖSTER, Bernhard**
**Hollich 127**
**D-4430 Steinfurt(DE)**
Erfinder: **KRAUSE, Siegfried**
**Auf der Woort 19**
**D-4400 Münster(DE)**

(74) Vertreter: **Münch, Volker, Dr. et al**
**BASF Lacke + Farben AG**
**Patente/Lizenzen/Dokumentation**
**Postfach 61 23**
**D-48136 Münster (DE)**

## Beschreibung

Gegenstand der vorliegenden Erfindung sind Beschichtungsmassen, enthaltend hydroxylgruppenhaltigen, gegebenenfalls modifizierten, Polyester und/oder hydroxylgruppenhaltiges Epoxidharz und/oder hydroxylgruppenhaltiges Acrylatcopolymer sowie einen gegenüber Hydroxylgruppen reaktiven Vernetzer und ein Gleitmittel.

Die Erfindung betrifft außerdem Verfahren zur Herstellung dieser Beschichtungsmassen und ihre Verwendung, insbesondere zur Außenlackierung von tiefgezogenen Dosen.

Verpackungsbehälter, wie beispielsweise Dosen, Tuben, Kanister, Eimer und dergleichen, die oft auch als Emballagen bezeichnet werden, weisen im allgemeinen auf ihrer Außenseite eine Lackierung auf, die in erster Linie der dekorativen Gestaltung der Emballagen dient. Aus diesem Grunde sind die problemlose Verarbeitung und das Ausbilden einwandfreier Oberflächen als Grundanforderung an geeignete Beschichtungsmassen zu nennen. Die einwandfreie Dekoration muß jedoch den zum Teil extremen Beanspruchungen bei der Herstellung und dem Gebrauch der Emballagen (Falzen, Bördeln, Verformungen, Sterilisation usw.) standhalten.

Die Außenlackierung von Emballagen besteht in der Regel aus einem mehrschichtigen Aufbau aus einem Grundlack als Dekorationsträger, einer Druckfarbenbeschichtung und gegebenenfalls einem farblosen Schutzlack, dem sogenannten "Silberlack". Besonders hohe Anforderungen werden an Grundlacke gestellt, die nicht mit einer farblosen Schutzlackierung als äußerem Abschluß versehen werden. Diese Grundlacke sind auch unter dem Namen "Non-varnish-Außenlack" bekannt.

"Non-Varnish-Außenlacke" müssen eine besonders gute Verträglichkeit zur nachfolgenden Bedruckung aufweisen, d.h. sie müssen gut bedruckbar sein, gute Haftvermittlung und einen guten Einschwitzeffekt zeigen. Die resultierenden Beschichtungen müssen hochglänzend sein, d.h. einen Glanzgrad (60° Reflexionswinkel) > 80 aufweisen, eine hohe Abriebbeständigkeit sowie eine glatte Oberflächenstruktur besitzen, d.h. z.B. keine Krater o. dgl. zeigen.

Derartige "Non-Varnish-Außenlacke" sind bekannt (vgl. z.B. Ullmanns Encyklopädie der technischen Chemie, 4. Auflage, 1978, Band 15, Seiten 713-714). Basisrohstoffe für diese Lacke sind modifizierte Alkydharze, Epoxidharze, Epoxidharzester, Polyester- und Polyacrylatharze. Diese "Non-Varnish-Außenlacke" enthalten üblicherweise ein Gleitmittel, um die Oberflächenhärte der resultierenden Beschichtung gezielt zu beeinflussen, um so optimale Abriebbeständigkeit der Beschichtungen bei gleichzeitig guter Oberflächenbeschaffenheit, hohem Glanz und guter Bedruckbarkeit zu erzielen. Als Gleitmittel in diesen bekannten Lacken werden Carnaubawachse und leicht flüchtige Wachse, wie z.B. Lanolin bzw. Bienenwachs eingesetzt.

Probleme treten aber auf, wenn diese bekannten "Non-Varnish-Außenlacke" für die Beschichtung von tiefgezogenen Dosen eingesetzt werden, die im oberen Dosenbereich sehr stark verformt werden. Auch bei dieser extrem starken Verformung muß gewährleistet sein, daß keine Beschädigung der Lackschicht auftritt. Diese Forderung kann nur durch Beschichtungsmassen erfüllt werden, die zu flexiblen Lackfilmen führen. Andererseits muß aber weiterhin gewährleistet sein, daß die resultierenden Beschichtungen den extremen mechanischen Beanspruchungen bei der Dosenherstellung und auch Füllung der Dosen standhalten. Das bedeutet, daß die resultierenden Lackfilme eine hohe Abriebfestigkeit und entsprechend hohe Härte, insbesondere Ritzhärte, aufweisen, was wiederum den Einsatz von Gleitmitteln erfordert, die diese Härte der Lackoberflächen gezielt steuern können. Gleitmittel, die eine hohe Ritzhärte gewährleisten, sind beispielsweise Polyethylen-, Polypropylen- oder Polytetrafluorethylen-Wachse. Diese Wachse sind aber normalerweise stark mattierend und daher für den Einsatz in Blechemballagen-Lacken nicht geeignet, da von den Dosenherstellern glänzende Oberflächen gefordert werden.

Der vorliegenden Erfindung lag somit die Aufgabe zugrunde, Beschichtungsmittel zur Verfügung zu stellen, die als "Non-Varnish-Außenlacke" für die Beschichtung von tiefgezogenen Dosen geeignet sind. Die resultierenden Beschichtungen sollten entsprechend eine glatte Oberflächenstruktur, einen hohen Glanzgrad, gute Bedruckbarkeit, gute Abriebbeständigkeit und hohe Ritzhärte bei gleichzeitig hoher Flexibilität der Filme aufweisen. Außerdem sollten die Beschichtungsmassen eine gute Lagerstabilität aufweisen, d.h. auch bei Lagerung der Beschichtungsmassen von 3 Monaten und mehr sollten die resultierenden Lackfilme die obenangegebenen Anforderungen bezüglich der optischen und mechanischen Eigenschaften erfüllen.

Die Aufgabe wird überraschenderweise gelöst durch eine Beschichtungsmasse, enthaltend hydroxylgruppenhaltige, gegebenenfalls modifizierte Polyester und/oder hydroxylgruppenhaltiges Epoxidharz und/oder hydroxylgruppenhaltiges Acrylatcopolymer sowie einen gegenüber Hydroxylgruppen reaktiven Vernetzer und ein Gleitmittel. Die Beschichtungsmasse ist dadurch gekennzeichnet, daß als Gleitmittel eine Wachspaste D eingesetzt wird, die

$d_1$) 3 bis 30 Gew.-% eines oder mehrerer Polyolefin- und/oder substituierter Polyolefinwachse

$d_2$) 0 bis 25 Gew.-% eines oder mehrerer Melaminformaldehydharze

2

d$_3$) 5 bis 40 Gew.-% eines oder mehrerer Acrylatharze mit einer OH-Zahl von 10 bis 150 mgKOH/g und einem zahlenmittleren Molekulargewicht von 2000 bis 7000 und

d$_4$) 10 bis 80 Gew.-% eines oder mehrerer organischer Lösungsmittel

enthält, wobei die Summe der Gewichtsanteile der Komponenten d$_1$ bis d$_4$ jeweils 100 Gew.-% beträgt.

Gegenstand der vorliegenden Erfindung ist außerdem ein Verfahren zur Herstellung dieser Beschichtungsmassen sowie die Verwendung dieser Beschichtungsmassen zur Beschichtung von Emballagen, insbesondere zur Außenlackierung von tiefgezogenen Dosen.

Angesichts der Vielzahl bekannter Gleitmittel war es überraschend und nicht vorhersehbar, daß gerade durch den Einsatz der erfindungsgemäßen Wachspaste Beschichtungsmassen erhalten werden, die zu Lackfilmen mit einem hohen Glanzgrad, glatter Oberflächenstruktur, guter Bedruckbarkeit und guter Abriebbeständigkeit bei gleichzeitig hoher Elastizität der Lackfilme führen, wobei dieses gute Eigenschaftsprofil der Lackfilme auch bei Lagerung der Beschichtungsmassen von 14 Tagen und länger erhalten bleibt.

In den Produktinformationen der in den erfindungsgemäßen Beschichtungsmassen eingesetzten Wachse wird zwar empfohlen, diese Wachsdispersionen als Gleitmittel in Dosenbeschichtungsmassen einzusetzen. Beschichtungsmassen, bei denen diese Wachsdispersion direkt - wie empfohlen - als Gleitmittel zugesetzt wird, weisen jedoch die erheblichen Nachteile auf, daß diese Beschichtungsmassen

matt und nicht lagerstabil sind. Bereits nach 14-tägiger Lagerung der Beschichtungsmassen zeigen die resultierenden Filme einen deutlichen - und bei der Beschichtung von Dosen nicht mehr akzeptablen - Glanzabfall im Vergleich zu Filmen, die aus frisch hergestellten Beschichtungsmassen erhalten wurden. Außerdem weisen diese Filme keine glatte Oberflächenstruktur auf, sondern zeigen viele Krater.

Im folgenden werden nun die einzelnen Komponenten der erfindungsgemäßen Beschichtungsmassen näher erläutert.

Als Bindemittel enthalten die Beschichtungsmassen ein oder mehrere hydroxylgruppenhaltige Polymere. Diese Polymeren können ggf. noch weitere funktionelle Gruppen, beispielsweise Carboxylgruppen, enthalten. Diese Polymeren (Komponente A) werden in den Beschichtungsmassen bevorzugt in einer Menge von 10 bis 60 Gew.-%, bezogen auf das Gewicht der Summe der Komponenten A bis F, eingesetzt. Diese hydroxylgruppenhaltigen Polymeren sind ausgewählt aus der Gruppe der hydroxylgruppenhaltigen Polyester und/oder hydroxylgruppenhaltigen acrylmodifizierten Polyester und/oder hydroxylgruppenhaltigen epoxidmodifizierten Polyester. Gegebenenfalls können sie auch in Kombination mit Epoxidharzen und/oder hydroxylgruppenhaltigen Acrylatcopolymerisaten eingesetzt werden. Entscheidend bei der Auswahl geeigneter Bindemittelkomponenten ist vor allem, daß sie in Kombination mit dem jeweiligen Vernetzer (Komponente B) zu Beschichtungen führen, die eine genügend hohe Flexibilität aufweisen, um die mechanischen Beanspruchungen bei der Verformung der beschichteten Dosen zu überstehen, ohne daß es etwa zum Abplatzen bzw. Reißen des Lackfilms oder ähnlichen Beschädigungen kommt.

Die als Komponente A einsetzbaren hydroxylgruppenhaltigen Polyester werden nach üblichen Verfahren hergestellt durch Veresterung von aliphatischen, cycloaliphatischen und aromatischen Di- und/oder Polyolen. Die Polyester weisen typischerweise Hydroxylzahlen zwischen 30 und 100 mg/KOH/g, bevorzugt zwischen 40 und 80 mgKOH/g sowie zahlenmittlere Molekulargewichte zwischen 3000 und 8000 auf. Bevorzugt werden Mischungen aus 0 bis 20 Teilen von Polyestern mit OH-Zahlen zwischen 70 und 80 mgKOH/g mit 40 bis 100 Teilen von Polyestern mit OH-Zahlen von 50 bis 100 mgKOH/g eingesetzt. Beispiele von für den Aufbau der Polyester geeigneten Carbonsäuren sind Phthalsäure, Isophthalsäure, Terephthalsäure, Tetrahydrophthalsäure, Hexahydrophthalsäure, Adipinsäure, Azelainsäure, Sebazinsäure, Maleinsäure, Glutarsäure und längerkettige, aliphatische oder cycloaliphatische Dicarbonsäuren, wie beispielsweise die unter dem Begriff "Dimerfettsäuren" bekannten Dicarbonsäuren. Handelsübliche technische Dimerfettsäuren enthalten i.a. mindestens 80 Gew.-% Dimerfettsäure sowie bis maximal 20 Gew.-% Trimere und bis zu 1 Gew.-% Monomere der entsprechenden Fettsäuren. Bevorzugt eingesetzt wird als Säurekomponente Isophthalsäure.

Für die Herstellung der Polyester als Alkoholkomponente eingesetzt werden Ethylenglykol, Propylenglykol-1,2 und -1,3, Butandiole, Pentandiole, Neopentylglykol, Hexandiole, 2-Methylpentandiol-1,5, 2-Ethylbutandiol-1,4, Dimethylolcyclohexan, Glycerin, Trimethylolethan, Trimethylolpropan und Trimethylolbutan, Pentaerythrit, Dipentaerythrit, Polycaprolactondiole und -triole u.a. Bevorzugt eingesetzt werden Hexandiol-1,6, Neopentylglykol und Trimethylolpropan.

Als Komponente A eingesetzt werden außerdem acrylmodifizierte Polyester, ggf. auch in Kombination mit den gerade beschriebenen Polyestern und/oder weiteren Bindemittelkomponenten. Diese acrylmodifizierten Polyester weisen i.a. OH-Zahlen zwischen 50 und 100 mgKOH/g, bevorzugt zwischen 90 und 100 mgKOH/g sowie zahlenmittlere Molekulargewicht zwischen 4000 und 6000 auf. Sie sind nach mehreren Methoden, beispielsweise aber durch direkten Einbau von Acrylat-Bausteinen beim Aufbau der Polyester, herstellbar. So können beispielsweise bei der Herstellung der Polyester Acryl- und/oder Methacrylsäure sowie Hydroxialkylacrylate und -methacrylate als Säure- bzw. Alkoholkomponente mitverwendet werden. Bevorzugt werden die acrylmodifizierten Polyester durch Acrylierung von gesättigten und ungesättigten Polyestern hergestellt. Beispielsweise können zunächst hydroxylgruppenhaltige Polyester mit (Meth)-Acrylsäure umgesetzt werden und dann in Gegenwart weiterer ungesättigter Monomerer polymerisiert werden. Ebenso können ungesättigte Polyester, z.B. hergestellt durch Verwendung von Malein- und Fumarsäure beim Aufbau der Polyester, zusammen mit Acrylmonomeren polymerisiert werden.

Weiterhin als Bindemittel geeignet sind epoxidmodifizierte Polyester mit OH-Zahlen zwischen 30 und 100 mgKOH/g, bevorzugt zwischen 40 und 60 mgKOH/g.

Unter epoxidmodifizierten Polyestern werden Polyester verstanden, die bereits bei der Herstellung der Polyester mit Epoxidharzen als Teil der Polyolkomponente kombiniert werden. Da Epoxidharze neben den endständigen Epoxidgruppen nämlich stets Hydroxylgruppen enthalten, können sie beim Aufbau der Polyester einen Teil des Polyalkohols ersetzen. Der Epoxidharzanteil variiert in den epoximodifizierten Polyestern zwischen 50 und 90 Gew.-%, bevorzugt 70 bis 90 Gew.-% Epoxidharz, bezogen auf das Gewicht des epoxidmodifizierten Polyesters. Als Beispiele für geeignete Verbindungen seien die im Handel unter den Markennamen

Uranox® der Firma DSM, Alftalat® und Resydrol® der Firma Hoechst, Jägahyd® der Firma Jäger (Düsseldorf) und Halwepox® der Chemischen Werke Hüttens-Albatus erhältlichen Polyester genannt.

Weiterhin besteht die Möglichkeit, den Polyester erst bei der Lackherstellung mit einem Epoxidharz zu kombinieren Chemische Umsetzungen zwischen diesen beiden Systemen laufen dann erst beim Einbrennen eines Films dieser Massen ab. Gerade in der Praxis haben sich diese Systeme einer Mischung aus Polyesterharz und Epoxidharz bewährt. Die oft beobachtete nicht vollständige Verträglichkeit von Polyester- und Epoxidharz wird beispielsweise durch Zusatz einer Aminoharz-Komponente verbessert. Auch die Kombination Polyester-/Epoxidharz mit Acrylatharzen als dritter Komponente ist möglich. Die Mischungsverhältnisse hydroxylgruppenhaltiger Polyester zu Epoxidharze liegen meist im Bereich zwischen 0 und 20 Teilen Epoxidharz je 100 Teilen Polyester. Für die Kombination mit dem Polyester werden bevorzugt niedrig- bis mittelviskose Epoxidharze wie beispielsweise Epikote® 1001, 824, 834 und 1004 der Shell-Chemie eingesetzt. Für den Einsatz in den Beschichtungsmassen geeignete Acrylatcopolymerisate weisen OH-Zahlen von 10 bis 150 mgKOH/g und zahlenmittlere Molekulargewichte von 2000 bis 12000 auf. Sie sind herstellbar durch Polymerisation mittels bekannter Verfahren von hydroxylgruppenhaltigen Monomeren mit geeigneten Comonomeren. Beispiele für hydroxifunktionelle Monomere sind Hydroxialkylester der Acryl- und Methacrylsäure oder anderer ungesättigter Carbonsäuren sowie die Umsetzungsprodukte von Acryl- und/oder Methacrylsäure mit Glycidylverbindungen und von Hydroxialkylestern ungesättigter Carbonsäuren mit $\epsilon$-Caprolacton. Beispiele für geeignete hydroxifunktionelle Monomere sind auf den Seiten 11 bis 12 dieser Beschreibung aufgeführt. Dort sind auch Beispiele für geeignete Comonomere beschrieben.

Als Vernetzer (Komponente B) enthalten die erfindungsgemäßen Beschichtungszusammensetzungen ein oder mehrere Aminoplastharze und/oder ein oder mehrere blockierte Di- oder Polyisocyanate. Der Vernetzer wird bevorzugt in Mengen von 1 bis 20 Gew.-%, bezogen auf das Gewicht der Komponenten A bis F, eingesetzt.

Bei den Aminoplastharzen handelt es sich um allgemein bekannte, in der Regel veretherte Melamin-Aldehyd- und/oder Benzoguanamin-Aldehyd-Umsetzungsprodukte. Bevorzugt eingesetzt werden die entsprechenden Formaldehyd-Umsetzungsprodukte. Die Verträglichkeit der Harze mit anderen Filmbildnern und Lösemitteln wird von der Kettenlänge des Veretherungsalkohols und dem Veretherungsgrad beeinflußt. Hauptsächliche Veretherungskomponenten sind n- und Isobutanol.

Bevorzugt eingesetzt werden Benzoguanamin-Formaldehydharze, da sie im Vergleich zu den Melaminharzen zu flexibleren Beschichtungen führen.

Zusammen mit den Aminoplastharzen oder als alleiniger Vernetzer werden blockierte Di- und Polyisocyanate eingesetzt. Als Isocyanatkomponente geeignet sind aliphatische, cycloaliphatische und aromatische Di- und Polyisocyanate, beispielsweise Trimethylen-, Tetramethylen-, Pentamethylen-, Hexamethylen-, Hexamethoxy-, Trimethylhexamethylen-1,6-diisocyanat und Tris-hexamethylen-triisocyanat; 1,3-Cyclopentan-, 1,4-Cyclohexan-, 1,2-Cyclohexan- und Isophorondiisocyanat sowie 2,4-, 2,6-Toluylendiisocyanat und deren Gemische, 4,4'-Diphenylmethandiisocyanat, m-Phenylen-, p-Phenylen-, 4,4'-Diphenyl-, 1,5-Naphthalin-, 1,4-Naphthalin-, 4,4'-Toluidin-, Xylylendiisocyanat sowie substituierte aromatische Systeme, wie z.B. Dianisidindiisocyanate, 4,4'-Diphenyletherdiisocyanate oder Chlorodiphenylendiisocyanate und höherfunktionelle aromatische Isocyanate, wie z.B. 1,3,5-Triisocyanatobenzol, 4,4',4''-Triisocyanatotriphenylmethan, 2,4,6-Triisocyanatotoluol und 4,4'-Diphenyldimethylmethan-2,2',5,5'-tetraisocyanat. Bevorzugt eingesetzt wird Hexamethoxydiisocyanat.

Als Blockierungsmittel für die Isocyanate geeignet sind beispielsweise Butoxim und Malonsäureester.

4

Die erfindungsgemäßen Beschichtungsmittel enthalten außerdem noch ein oder mehrere organische Lösungsmittel, bevorzugt in Mengen von 20 bis 70 Gew.-%, bezogen auf das Gewicht der Summe der Komponenten A bis F. Der jeweils optimale Lösungsmittelgehalt hängt insbesondere von dem Applikationsverfahren (Spritzen, Tauchen u. dgl.) ab und kann vom Durchschnittsfachmann anhand weniger Routineversuche einfach ermittelt werden.

Als Lösemittel geeignet sind aliphatische, cycloaliphatische und aromatische Kohlenwasserstoffe, Ester, Ether und Ketone, beispielsweise Xylol, verschiedene Testbenzine, Tetralin, Dekalin, Solvent Naphtha®, verschiedene Solvesso®-Typen, verschiedene Shellsol®-Typen, Butylglykol, Ethylenglykoldibutylether, Ethylenglykoldiethylether, Diethylenglykoldimethylether, Methylethylketon, Methyl-n-amylketon, Diethylketon, Ethylbutylketon, Diisopropylketon, Diisobutylketon, Acetylaceton, Methylacetat, Ethylacetat, Propylacetat, Butylacetat, Amylacetat, Methylglykolacetat, Ethylglykolacetat, Butyldiglykolacetat.

Als erfindungswesentlichen Bestandteil enthalten die Beschichtungsmassen zur Einstellung der Härte der Beschichtungen als Gleitmittel eine Wachspaste D, die

$d_1$) 3 bis 30 Gew.-%, bevorzugt 6 bis 15 Gew.-%, eines oder mehrerer Polyolefin- und/oder Substituierter Polyolefinwachse

$d_2$) 0 bis 25 Gew.-%, bevorzugt 0 bis 10 Gew.-%, eines oder mehrerer Melamin-Formaldehydharze

$d_3$) 5 bis 40 Gew.-%, bevorzugt 5 bis 30 Gew.-%, eines oder mehrerer Acrylatharze mit einer OH-Zahl von 10 bis 150 mgKOH/g und einem zahlenmittleren Molekulargewicht von 2000-7000 und

$d_4$) 10 bis 80 Gew.-% eines oder mehrerer organischer Lösungsmittel enthält, wobei die Summe der Gewichtsanteile der Komponenten $d_1$ bis $d_4$ jeweils 100 Gew.-% beträgt.

Bevorzugt eingesetzt werden Polyethylen- und/oder Polypropylen- und/oder Polytetrafluorethylenwachse, wobei die Polyethylenwachse besonders bevorzugt sind.

Beispiele für geeignete Wachse (Komponente $d_1$) sind die im Handel unter dem Markennamen "SST3" der Firma Shamrock Chemicals und "Polyfluo 190" sowie "Polyfluo 400" der Firma Floridienne Polymers befindlichen Polytetrafluorethylenwachse sowie die unter dem Markennamen "PE 1500" von der Firma Lanco vertriebenen Polyethylenwachse, ferner die Polypropylenwachse "PP 1362 D" und "CP 1481 8 F" der Firma Lanco sowie Mischungen von Polyethylen- und Polytetrafluorethylen-Wachsen, wie die Handelsprodukte "TF 1780" und "TF 1778" der Firma Lanco, "MP 26" und "MP 611" der Firma Micro Powders sowie verschiedene andere Wachse, beispielsweise das Handelsprodukt "447-A" der Firma Luba-Paint.

Das Wachs bzw. eine Dispersion des Wachses in organischen Lösungsmitteln, wie z.B. verschiedenen Shellsol®- und/oder Solvesso®-Typen, wird durch Homogenisieren der Komponenten $d_1$ bis $d_3$ zusammen mit einem Teil der Komponente $d_4$ zu einer Wachspaste verarbeitet. Durch Zugabe weiteren Lösungsmittels wird die Viskosität der Wachspaste derart eingestellt, daß eine Weiterverarbeitung der Wachspaste mittels Rührwerksmühlen, Perlmühlen, Sandmühlen und dergleichen möglich ist.

Für die Herstellung der Wachspaste geeignete Acrylatharze sind niedermolekular (zahlenmittleres Molekulargewicht 2000-7000), wirken für das Wachs gut benetzend und reagieren unter den Einbrennbedingungen rasch mit den eingesetzten Vernetzern B. Sie weisen OH-Zahlen zwischen 10 und 150 mgKOH/g, bevorzugt 20 bis 120 mgKOH/g auf. Sie sind herstellbar durch Copolymerisation von hydroxylgruppenhaltigen Monomeren mit weiteren ethylenisch ungesättigten Verbindungen.

Als Beispiele für hydroxifunktionelle Monomere seien Hydroxialkylester der Acryl- und Methacrylsäure, z.B. Hydroxiethyl(meth)acrylat, Hydroxipropyl(meth)acrylat, Hydroxibutyl(meth)-acrylat sowie die entsprechenden Hydroxialkylester der Croton-, Isocroton-, Itacon-, Malein- und Fumarsäure genannt.

Als Hydroxialkylester $\alpha,\beta$-ethylenisch ungesättigter Carbonsäuren können zum Teil Umsetzungsprodukte von Acrylsäure und/oder Methacrylsäure mit dem Glycidylester einer Carbonsäure mit einem tertiären $\alpha$-Kohlenstoffatom oder von dem Glycidylester einer $\alpha,\beta$-ethylenisch ungesättigten Carbonsäure mit einer tertiären aliphatischen Carbonsäure verwendet werden. Weiterhin können zum Teil Umsetzungsprodukte aus einem Mol Hydroxiethylacrylat und/oder Hydroxiethylmethacrylat mit durchschnittlich 2 Molen $\epsilon$-Caprolacton zur Anwendung gelangen.

Als weitere ethylenisch-ungesättigte Monomere sind geeignet Alkylester der Acryl- und Methacrylsäure, wie z.B. Methylacrylat, Ethylacrylat, Propylacrylat, Butylacrylat, t-Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat und die entsprechenden Methacrylate. Weitere Monomere können eingesetzt werden, sofern diese nicht zu unerwünschten Eigenschaften des Copolymerisats führen. Als Beispiele für geeignete Acrylatharze seien die unter den Markennamen Synthalat® der Synthopol, Setalux® der Akzo, Synthacryl® der Hoechst und Uracron® der DSM erhältlichen Harze genannt.

Besonders bevorzugt als Komponente $d_2$ wird das unter dem Markennamen "Maprenal MF 800" der Firma Casella AG im Handel befindliche nichtplastifizierte, isobutylveretherte Melaminformaldehydharz

eingesetzt.

Beispiele für geeignete Lösemittel (Komponende $d_4$) sind die auf Seite 10 dieser Beschreibung aufgeführten Lösemittel. Sie werden in Mengen von 10 bis 80 Gew.-% in der Wachspaste eingearbeitet, wobei die jeweils eingesetzte Menge so gewählt wird, daß eine gute Weiterverarbeitbarkeit der Wachspaste, z.B. in Rührwerks-, Perl- und Sandmühlen, resultiert.

Die Wachspaste wird in den Beschichtungsmassen in einer Menge von 0,8 bis 8,0 Gew.-%, bezogen auf das Gesamtgewicht der Summe der Komponenten A bis F, eingesetzt. Mit steigender Konzentration der Wachspaste in den Beschichtungsmassen steigt die Gleitfähigkeit und Kratzfestigkeit der resultierenden Beschichtung, während die Bedruckbarkeit sinkt. Da aber auch ggf. in der Beschichtungsmasse enthaltende Pigmente einen Einfluß auf die Gleitfähigkeit und Kratzfestigkeit der resultierenden Beschichtung haben, sind die jeweils bevorzugt eingesetzten Mengen der Wachspaste davon abhängig, ob es sich um pigmentierte oder nichtpigmentierte Systeme handelt. So wird die Wachspaste in pigmentierten Beschichtungsmassen bevorzugt in Mengen von 1,5 bis 3 Gew.-%, bezogen auf das Gesamtgewicht der Summe der Komponenten A bis F, eingesetzt, während in unpigmentierten Systemen die Menge an zugesetzter Wachspaste zwischen 3 und 6 Gew.-%, bezogen auf das Gesamtgewicht der Summe der Komponenten A bis F, liegt. Die für den jeweiligen Einsatzzweck optimale Menge an einzusetzender Wachspaste kann aber auch anhand weniger Routineversuche ermittelt werden.

Wie bereits angesprochen, können die Beschichtungsmassen in Form von Klarlacken, Lasuren und Decklacken eingesetzt werden. Der Pigmentgehalt der Beschichtungsmassen liegt entsprechend zwischen 0 und 35 Gew.-%, bezogen auf das Gesamtgewicht der Summe der Komponenten A bis F. Als Pigmente geeignet sind organische und anorganische Pigmente, beispielsweise Titandioxid, verschiedene Eisenoxidpigmente und Diacrylide.

Weiterhin können die Beschichtungsmassen noch 0 bis 1 Gew.-%, bezogen auf das Gesamtgewicht der Summe der Komponenten A bis F, weiterer Hilfs- und Zusatzstoffe, beispielsweise Verlaufsmittel (z.B. hochmolekulare Acrylate), Benetzungsmittel (z.B. hochmolekulare Acrylate) und Entschäumer (z.B. Silikonöl) enthalten.

Gegebenenfalls können den Beschichtungsmassen noch 0 bis 15 Gew.-%, bezogen auf das Gesamtgewicht der Beschichtungsmasse, Füllstoffe, beispielsweise Talkum, Glimmer, Kaolin, Kreide, Quarzmehl, Schiefermehl, Bariumsulfat, verschiedene Kieselsäuren, Silikate, Glasfasern, organische Fasern und dergleichen, zugesetzt werden.

Die Herstellung der erfindungsgemäßen Beschichtungsmassen erfolgt in üblicher Weise durch Vermischen der Komponenten. Mitunter ist es angezeigt, eine Komponente, falls sie nicht in flüssiger Form anliegt, zunächst in einem Lösungsmittel zu lösen und diese Lösung mit den übrigen Komponenten zu vermischen. Die Einarbeitung der Wachspaste erfolgt bevorzugt derart, daß sie als letzte Komponente in die Beschichtungsmasse eingearbeitet wird, indem sie unter Rühren zu der Mischung der übrigen Komponenten zugegeben wird, wobei unbedingt darauf zu achten ist, daß die Temperatur der Mischung unterhalb des Schmelzpunktes des Wachses bleibt, um so z.B. eventuelle Umkristallisationsprozesse des Wachses beim Abkühlen zu vermeiden. Die Einarbeitung der Pigmente E erfolgt im allgemeinen durch Anmahlen der Pigmente mit einem der Bindemittel und Zumischen der restlichen Komponenten. Die Wachspaste D wird - wie oben beschrieben - bevorzugt als letzte Komponente eingearbeitet wird.

Die erfindungsgemäßen Beschichtungsmassen härten aus im Temperaturbereich von 180 bis 235 °C (Objekttemperatur, "Metall Peak Temperature") während einer Zeit von 5 bis 90 s. Diese Beschichtungsmassen können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird. Bevorzugt werden die Beschichtungsmassen zur Außenlackierung von Blechemballagen, insbesondere tiefgezogenen Getränkedosen, eingesetzt. Die Applikation und Aushärtung der Beschichtungsmassen erfolgt in diesem Fall mittels in der Verpackungsindustrie üblichen Lackieranlagen.

Die Auftragsmenge der Beschichtungsmassen hängt vom jeweiligen Verwendungszweck ab. Werden die Beschichtungsmassen im Bereich der Außenlackierung von Blechemballagen eingesetzt, beträgt die Schichtdicke der ausgehärteten Filme im allgemeinen 5 bis 20 $\mu$m.

Als Substrate geeignet sind insbesondere Blechemballagen, wie z.B. Dosen, Eimer, Kanister, Tuben, Gläserverschlüsse und 2-teilige tiefgezogene Getränkedosen, besonders bevorzugt tiefgezogene Getränkedosen, die aus unterschiedlichsten Materialien bestehen, wie z.B. Aluminium, Schwarzblech, Weißblech und verschiedenen Eisenlegierungen, die ggf. mit einer Passivierungsschicht auf Basis von Nickel-, Chrom- und Zinkverbindungen versehen sind. Selbstverständlich können die erfindungsgemäßen Beschichtungsmassen aber auch auf andere Substrate appliziert werden.

Die erfindungsgemäßen Beschichtungsmassen weisen den Vorteil auf, daß die resultierenden Lackfilme einen hohen Glanzgrad, glatte Oberflächenstruktur, gute Bedruckbarkeit und gute Abriebbeständigkeit bei gleichzeitig hoher Elastizität aufweisen. Im Hinblick auf die praktische Anwendbarkeit ist besonders die gute Lagerstabilität der Beschichtungsmassen von Bedeutung.

Die Erfindung wird nun in den folgenden Beispielen näher erläutert. Alle Angaben über Teile und Prozente sind Gewichtsangaben, sofern nicht ausdrücklich etwas anderes festgestellt wird.

### Herstellung der Wachspaste 1

1,4 Teile einer handelsüblichen 20 %igen Polyethylenwachs-Dispersion (Handelsprodukt "CERAFAK 178" der Firma CERA CHEMIE B.V., 7400 AM DEVENTER, Niederlande), 0,3 Teile einer handelsüblichen, 72 %igen Lösung in Isobutanol eines nichtplastifizierten, isobutylveretherten Melaminformaldehydharzes (Handelsprodukt "Maprenal® MF 800" der Casella AG, Hoechst-Gruppe) und 0,5 Teile einer handelsüblichen Lösung (60 %ig in Xylol/Butylacetat 9 : 1) eines niedermolekularen Acrylatharzes (Hydroxyzahl 45 mgKOH/g, bezogen auf Festharz) werden mittels einer Rührwerksmühle unter Kühlung zu einer homogenen Wachspaste verarbeitet.

### Herstellung der Wachspaste 2

1,4 Teile der oben beschriebenen 20 %igen Polyethylenwachs-Dispersion ("CERAFAK 178" der CERA CHEMIE B.V.) und 0,5 Teile einer handelsüblichen Lösung (60 %ig in Xylol/Butylacetat 9 : 1 ) eines Acrylatharzes (Hydroxylzahl 45 mgKOH/g, bezogen auf Festharz) werden mittels einer Rührwerksmühle unter Kühlung zu einer homogenen Wachspaste verarbeitet.

### Herstellung der Wachspasten 3 bis 10

95,4 Teile der in Tabelle 1 angegebenen handelsüblichen Wachse, 200 Teile Solvesso® 150, 120 Teile einer 72 %igen Lösung in Isobutanol eines nichtplastifizierten, isobutylveretherten Melaminformaldehydharzes (Handelsprodukt "Maprenal® MF 800" der Casella AG) und 270 Teile einer handelsüblichen Lösung (60 %ig in Xylol/Butylacetat 9 : 1) eines niedermolekularen Acrylatharzes (OH-Zahl 45 mgKOH/g, bezogen auf Festharz) werden unter Kühlung mittels einer Perlmühle zu einer homogenen Wachspaste verarbeitet.

### Herstellung der Wachsdispersion 11

95,4 Teile einer handelsüblichen Mischung von Polyethylen- / Polytetrafluorethylenwachsen (Handelsprodukt "MP 26" der Firma Micro Powders) und 200 Teile Solvesso® 150 werden unter Kühlung mittels einer Perlmühle zu einer homogenen Wachsdispersion verarbeitet.

### Herstellung der Wachsdispersion 12

95,4 Teile einer handelsüblichen Mischung von Polyethylen-/Polytetrafluorethylenwachsen (Handelsprodukt "MP 611" der Firma Micro Powders) und 200 Teile Solvesso® 150 werden unter Kühlung mittels einer Perlmühle zu einer homogenen Wachsdispersion verarbeitet.

### Beispiel 1

27,0 Teile Titandioxid vom Rutil-Typ und 28,5 Teile einer handelsüblichen Lösung eines acrylierten Polyesters (Polyester/Acrylatharz 1 : 1, Säurezahl 45-50 mgKOH/g, OH-Zahl 80 bis 100 mgKOH/g) berechnet auf das Festharz, Lösungsmittel Solvesso® 150, Butylglykol) werden mittels eines Dissolvers auf eine Feinheit von 7-10 $\mu$m gemahlen. Dann werden 3,2 Teile einer Lösung (60 % Festharz, 32 % Solvesso® 150, 8 % Butylglykol) eines gesättigten Polyesters auf Basis Isophthalsäure, Dimerfettsäure, Hexandiol, Neopentylglykol und Trimethylolpropan mit einer Säurezahl unter 10 mgKOH/g

Tabelle 1

| In den Pasten eingesetzte Wachse | |
|---|---|
| Paste | Wachs |
| 3 | SST 3, Polytetrafluorethylenwachs der Firma Shamrock Chemicals |
| 4 | TF 1780, Polytetrafluorethylen-/Polyethylenwachs der Firma Lanco (Bremen) |
| 5 | TF 1778, Polytetrafluorethylen-/Polyethylenwachs der Firma Lanco (Bremen) |
| 6 | Polyfluo 190, Polytetrafluorethylenwachs der Firma Floridienne Polymers |
| 7 | Polyfluo 400, Polytetrafluorethylenwachs der Firma Floridienne Polymers |
| 8 | MP 26, Polytetrafluorethylen-/Polyethylenwachs Firma Micro Powders |
| 9 | MP 611, Polytetrafluorethylen-/Polyethylenwachs Firma Micro Powders |
| 10 | PE 1500, Polyethylenwachs der Firma Lanco (Bremen) |

und einer Hydroxylzahl von 76 mg KOH/g, 7,6 Teile einer handelsüblichen 70 %igen Lösung eines epoxidharzmodifizierten Alkydharzes (Säurezahl 40-60 mgKOH/g, bezogen auf Festharz), 7,6 Teile einer 75 %igen Lösung in Xylol eines Epoxidharzes auf Basis Bisphenol A (Epoxidäquivalentgewicht 450-500 g), 6,5 Teile einer 82-86 %igen Lösung in n-Butanol eines mit n-Butanol veretherten Benzoguanaminharzes, 4,2 Teile mit Butoxim verkapptes Hexamethoxydiisocyanat, 10 Teile Butyldiglykolacetat und 3,2 Teile Butylglykol zugemischt. Zu dieser Mischung werden dann unter Rühren 2,2 Teile der Wachspaste 1 eingearbeitet, wobei darauf zu achten ist, daß die Temperatur nicht über 35°C ansteigt.

Die so hergestellte Beschichtungsmasse 1 wird auf Weißblech E 2,8/2,8 aufgerakelt (Schichtdicke trocken 15 $\mu$m) und im Umluftofen 1 min bei 200°C eingebrannt. Von der resultierenden Beschichtung wird der Glanzgrad (60°) und die Kraterneigung untersucht. Die Prüfergebnisse sind in Tabelle 2 dargestellt.

Zur Beurteilung der Lagerstabilität wurde die Beschichtungsmasse 1 14 Tage bei Raumtemperatur gelagert, ehe sie appliziert wurde. Dann wurde sie ebenfalls auf Weißblech E 2,8/2,8 aufgerakelt (Schichtdicke trocken 15 $\mu$m) und im Umluftofen 1 min bei 200°C eingebrannt. Von der resultierenden Beschichtung wird ebenfalls der Glanzgrad (60°) und die Kraterneigung untersucht. Die Ergebnisse sind in Tabelle 2 dargestellt.

Zur Prüfung der Abriebeigenschaften wird die Beschichtungsmasse 1 außerdem außen auf "DWI (Draun and wall ironed)-Getränkedosen" mittels in der Verpackungsindustrie üblicher Lackiermaschinen appliziert (Schichtdicke 10 $\mu$m trocken) und 1 min. bei 200°C eingebrannt. Nun wird ein Dekor auf die gehärtete Beschichtung unter Verwendung handelsüblicher Druckfarben aufgedruckt.

Bei den so bedruckten Getränkedosen wird anschließend mittels bekannter üblicher Maschinen der obere Dosenteil verengt (vom Innendurchmesser der Dosen oben von 67 mm auf einen Innendurchmesser oben von 57 mm) - sogenannte "spin spin Necking Verformung" - , wobei die Anzahl der Dosen, die pro Minute verformt werden, bei 1000 Stück liegt. Diese verengten Dosen zeigten trotz der hohen mechanischen Beanspruchung während der Bedruckung und Verformung keine Abrieberscheinungen.

Vergleichsbeispiel 1

Es wird analog Beispiel 1 eine Beschichtungsmasse V1 hergestellt, allerdings mit dem Unterschied, daß statt 2,2 Teilen der Wachspaste 1, 1,4 Teile der handelsüblichen 20 %igen Polyethylenwachs-Dispersion (Handelsprodukt "CERAFAK 178" der Firma CERA CHEMIE B.V.) - wie in Beispiel 1 im Fall der Wachspaste 1 beschrieben - in die Beschichtungsmasse V1 eingearbeitet werden.

Analog Beispiel 1 wird diese Beschichtungsmasse V1 direkt nach Herstellung sowie nach vorangegangener 14-tägiger Lagerung bei Raumtemperatur auf Weißblech E 2,8/2,8 appliziert (Schichtdicke 15 $\mu$m trocken) und 1 min bei 200°C eingebrannt. Von der resultierenden Beschichtung wird der Glanzgrad (60°) und die Kraterneigung untersucht. Die Prüfergebnisse sind in Tabelle 2 dargestellt.

Analog zu Beispiel 1 werden die Abriebeigenschaften der unter Verwendung der Beschichtungsmasse V1 hergestellten Beschichtungen untersucht, indem die Beschichtungsmasse V1 auf "DWI-Getränkedosen" appliziert und eingebrannt wird, die Dosen anschließend bedruckt und im oberen Dosenbereich vom Innendurchmesser 67 mm auf einen Innendurchmesser von 57 mm verengt werden. Die Zahl der pro Minute verformten Dosen beträgt ebenfalls 1000 Stück. Auch in diesem Fall zeigten die so verformten Dosen keine Abrieberscheinungen.

Beispiel 2

Es wird analog zu Beispiel 1 eine Beschichtungsmasse 2 hergestellt, mit dem einzigen Unterschied, daß statt 2,2 Teilen Wachspaste 1 nun 1,9 Teile Wachspaste 2 eingearbeitet werden. Die Applikation der Beschichtungsmasse 2 auf Weißblech E 2,8/2,8 und Aushärtung und Prüfung der erhaltenen Beschichtung erfolgt wie in Beispiel 1 beschrieben. Die Prüfergebnisse sind in Tabelle 2 dargestellt.
Die Prüfung der Abriebeigenschaften erfolgte ebenfalls analog Beispiel 1 und ergab keine Abrieberscheinungen bei den verformten Dosen.

Beispiel 3 bis 10

Es werden analog zu Beispiel 1 die Beschichtungsmassen 3 bis 10 hergestellt, mit dem einzigen Unterschied, daß statt 2,2 Teilen Wachspaste 1 nun 2,5 Teile Wachspaste 3 bis 10 eingearbeitet werden. Die Applikation, Aushärtung und Prüfung der Beschichtungsmassen erfolgt wie in Beispiel 1 beschrieben. Die Prüfergebnisse sind in Tabelle 2 dargestellt.
Die Prüfung der Abriebeigenschaften erfolgte ebenfalls analog Beispiel 1 und ergab keine Abrieberscheinungen bei den verformten Dosen.

Beispiel 11

Es wird analog Beispiel 1 eine Beschichtungsmasse 11 hergestellt, allerdings mit dem Unterschied, daß kein Titandioxid zugesetzt wird (Klarlack) und daß statt 2,2 Teilen der Wachspaste 1 nun 4,4 Teile Wachspaste 1 zugesetzt werden. Die Applikation der Beschichtungsmasse 12 auf Weißblech E 2,8/2,8, Aushärtung und Prüfung der erhaltenen Beschichtung erfolgt wie in Beispiel 1 beschrieben. Die Prüfergebnisse sind in Tabelle 2 dargestellt.
Die Prüfung der Abriebeigenschaftgen erfolgte ebenfalls analog Beispiel 1 und ergab keine Abrieberscheinungen bei den verformten Dosen.

Vergleichsbeispiele 2 bis 3

Es werden analog zu Beispiel 1 die Beschichtungsmassen V2 und V3 hergestellt, mit dem einzigen Unterschied, daß statt 2,2 Teilen der Wachspaste 1 nun 1,0 Teile der Wachsdispersion 11 bzw. 12 eingearbeitet werden. Die Applikation, Aushärtung und Prüfung der Beschichtungsmassen erfolgt wie in Beispiel 1 beschrieben. Die Prüfergebnisse sind in Tabelle 2 dargestellt.
Die Prüfung der Abriebeigenschaften erfolgte ebenfalls analog Beispiel 1 und ergab keine Abrieberscheinungen bei den verformten Dosen.

Vergleichsbeispiel 4

Es wird analog Beispiel 11 eine Beschichtungsmasse V4 hergestellt, allerdings mit dem Unterschied, daß statt 4,4 Teilen der Wachspaste 1 2,8 Teile der handelsüblichen 20 %igen Polyethylenwachs-Dispersion (Handelsprodukt "CERAFAK 178" der Firma CERA CHEMIE B.V.) -wie in Beispiel 1 im Fall der Wachspaste 1 beschrieben - in die Beschichtungsmasse V4 eingearbeitet werden.
Analog Beispiel 1 wird diese Beschichtungsmasse V4 direkt nach Herstellung sowie nach vorangegangener 14-tägiger Lagerung bei Raumtemperatur auf Weißblech E 2,8/2,8 appliziert (Schichtdicke 15 $\mu$m trocken) und 1 min. bei 200°C eingebrannt. Von der resultierenden Beschichtung wird der Glanzgrad (60°) und die Kraterneigung untersucht. Die Prüfergebnisse sind in Tabelle 2 dargestellt.
Analog zu Beispiel 1 werden die Abriebeigenschaften der unter Verwendung der Beschichtungsmasse V4 hergestellten Beschichtungen untersucht, indem die Beschichtungsmasse V4 auf "DWI-Getränkedosen" appliziert und eingebrannt wird, die Dosen anschließend bedruckt und im oberen Dosenbereich vom Innendurchmesser 67 mm auf einen Innendurchmesser von 57 mm verengt werden. Die Zahl der pro Minute verformten Dosen beträgt ebenfalls 1000 Stück. Auch in diesem Fall zeigten die so verformten Dosen keine Abrieberscheinungen.

Erläuterungen der Tabelle 2:

a: Applikation der Beschichtungsmassen erfolgte direkt im Anschluß an ihre Herstellung.

b: Die Beschichtungsmassen wurden nach ihrer Herstellung zunächst 14 Tage bei Raumtemperatur gelagert und erst danach appliziert.

c: Die Kraterneigung wurde visuell beurteilt: 0 = keine Krater, 5 = starke Kraterbildung.

d: Gemessen mit dem Erichsen-Ritzhärtegerät Modell 239/2, Auflagekraft 6 N.

Tabelle 2: Prüfergebnisse

| Bei-spiel | Glanz (60°) ohne Lag. [a] | Glanz (60°) mit Lag. [b] | Krater [c] ohne Lag. [a] | Krater [c] mit Lag. [b] | Ritzhärte [d] |
|---|---|---|---|---|---|
| 1 | 83 | 83 | 0 | 0 | 6 |
| 2 | 83 | 83 | 0 | 0 | 6 |
| 3 | > 80 | > 80 | 0 | 0 | 1 |
| 4 | > 80 | > 80 | 0 | 0 | 22 |
| 5 | > 80 | > 80 | 0 | 0 | > 22 |
| 6 | > 80 | > 80 | 0 | 0 | > 22 |
| 7 | > 80 | > 80 | 0 | 0 | > 22 |
| 8 | > 80 | > 80 | 0 | 0 | > 22 |
| 9 | > 80 | > 80 | 0 | 0 | 20 |
| 10 | > 80 | > 80 | 0 | 0 | > 22 |
| 11 | > 80 | > 80 | 0 | 0 | – |
| 12 | > 80 | > 80 | 0 | 0 | – |
| V1 | 83 | $\leq$ 60 | 0 | 5 | 6 |
| V2 | > 80 | $\leq$ 60 | 0 | 5 | > 22 |
| V3 | > 80 | $\leq$ 60 | 0 | 5 | 20 |
| V4 | > 80 | $\leq$ 60 | 0 | 5 | – |

EP 0 462 981 B1

**Patentansprüche**

1. Beschichtungsmassen, enthaltend hydroxylgruppenhaltigen, gegebenenfalls modifizierten, Polyester und/oder hydroxylgruppenhaltiges Epoxidharz und/oder hydroxylgruppenhaltiges Acrylatcopolymer sowie einen gegenüber Hydroxylgruppen reaktiven Vernetzer und ein Gleitmittel, dadurch gekennzeichnet, daß als Gleitmittel eine Wachspaste D eingesetzt wird, die

   $d_1$) 3 bis 30 Gew.-% eines oder mehrerer Polyolefin- und/oder substituierter Polyolefinwachse
   $d_2$) 0 bis 25 Gew.-% eines oder mehrerer Melaminformaldehydharze
   $d_3$) 5 bis 40 Gew.-% eines oder mehrerer Acrylatharze mit einer OH-Zahl von 10 bis 150 mgKOH/g und einem Zahlenmittleren Molekulargewicht von 2000 bis 7000 und
   $d_4$) 10 bis 80 Gew.-% eines oder mehrerer organischer Lösungsmittel

   enthält, wobei die Summe der Gewichtsanteile der Komponenten $d_1$ bis $d_4$ jeweils 100 Gew.-% beträgt.

2. Verfahren zum Herstellen einer Beschichtungsmasse, enthaltend hydroxylgruppenhaltigen, gegebenenfalls modifizierten, Polyester und/oder hydroxylgruppenhaltiges Epoxidharz und/oder hydroxylgruppenhaltiges Acrylat-Copolymer sowie einen gegenüber Hydroxylgruppen reaktiven Vernetzer und ein Gleitmittel, bei dem die einzelnen Komponenten intensiv vermischt werden, dadurch gekennzeichnet, daß als Gleitmittel eine Wachspaste D eingesetzt wird, die

   $d_1$) 3 bis 30 Gew.-% eines oder mehrerer Polyolefin- und/oder substituierter Polyolefinwachse
   $d_2$) 0 bis 25 Gew.-% eines oder mehrerer Melaminformaldehydharze
   $d_3$) 5 bis 40 Gew.-% eines oder mehrerer Acrylatharze mit einer OH-Zahl von 10 bis 150 mgKOH/g und einem zahlenmittleren Molekulargewicht von 2000 bis 7000 und
   $d_4$) 10 bis 80 Gew.-% eines oder mehrerer organischer Lösungsmittel

   enthält, wobei die Summe der Gewichtsanteile der Komponenten $d_1$ bis $d_4$ jeweils 100 Gew.-% beträgt.

3. Beschichtungsmasse oder Verfahren nach Anspruch 1 oder 2, dadurch gekennzeichnet, daß die Beschichtungsmasse

   A) 10 bis 60 Gew.-% eines oder mehrerer hydroxylgruppenhaltigen, ggf. modifizierten, Polyesters und/oder Epoxidharzes und/oder Acrylatcopolymerisats
   B) 1 bis 20 Gew.-% eines oder mehrerer Aminoplastharzes und/oder eines oder mehrerer blockierter Di- oder Polyisocyanates
   C) 20 bis 70 Gew.-% eines oder mehrerer organischer Lösungsmittel
   D) 0,8 bis 8,0 Gew.-% der Wachspaste D
   E) 0 bis 35 Gew.-% eines oder mehrerer Pigmente und
   F) 0 bis 1 Gew.-% weiterer Hilfs- und Zusatzstoffe, enthält, wobei die Summe der Gewichtsanteile der Komponenten A bis F jeweils 100 Gew.-% beträgt.

4. Beschichtungsmasse oder Verfahren nach einem der Ansprüche 1 bis 3, dadurch gekennzeichnet, daß die Wachspaste D

   $d_1$) 6 bis 15 Gew.-% eines oder mehrerer Polyolefin- und/oder substituierter Polyolefinwachse
   $d_2$) 0 bis 10 Gew.-% eines oder mehrerer Melaminformaldehydharze
   $d_3$) 5 bis 40 Gew.-% eines oder mehrerer Acrylatharze mit einer OH-Zahl von 10 bis 150 mgKOH/g und einem zahlenmittleren Molekulargewicht von 2000 bis 7000 und
   $d_4$) 10 bis 80 Gew.-% eines oder mehrerer organischer Lösungsmittel

   enthält, wobei die Summe der Gewichtsanteile der Komponenten $d_1$ bis $d_4$ jeweils 100 Gew.-% beträgt.

5. Beschichtungsmasse oder Verfahren nach einem der Ansprüche 1 bis 4, dadurch gekennzeichnet, daß die Beschichtungsmasse keine Pigmente und 3,0 bis 6,0 Gew.-% Wachspaste D enthält.

6. Beschichtungsmasse oder Verfahren nach einem der Ansprüche 1 bis 4, dadurch gekennzeichnet, daß die Beschichtungsmasse 15 bis 35 Gew.-% Pigment und 1,5 bis 3,0 Gew.-% Wachspaste D enthält.

7. Beschichtungsmasse oder Verfahren nach einem der Ansprüche 1 bis 6, dadurch gekennzeichnet, daß die Wachspaste D als Komponente $d_1$ ein oder mehrere Polyethylen- und/oder Polypropylen- und/oder Polytetrafluorethylenwachse enthält.

8. Beschichtungsmasse oder Verfahren nach einem der Ansprüche 1 bis 6, dadurch gekennzeichnet, daß die Wachspaste D als Komponente $d_1$ ein oder mehrere Polyethylenwachse enthält.

12

9. Verwendung der Beschichtungsmassen nach einem der Ansprüche 1 und 3 bis 8 zur Beschichtung von Emballagen.

10. Verwendung der Beschichtungsmassen nach einem der Ansprüche 1 und 3 bis 8 als Non-Varnish-Außenlack für die Beschichtung von tiefgezogenen Dosen.

**Claims**

1. Coating compositions comprising a hydroxyl-containing, modified or unmodified polyester and/or a hydroxyl-containing epoxy resin and/or a hydroxyl-containing acrylate copolymer as well as a crosslinking agent reactive towards hydroxyl groups and a lubricant, wherein a wax paste D is used as lubricant, which paste D comprises

   $d_1$) 3 to 30% by weight of one or more polyolefin waxes and/or substituted polyolefin waxes

   $d_2$) 0 to 25% by weight of one or more melamine-formaldehyde resins

   $d_3$) 5 to 40% by weight of one or more acrylate resins having a hydroxyl value of 10 to 150 mg of KOH/g and a number average molecular weight of 2000 to 7000, and

   $d_4$) 10 to 80% by weight of one or more organic solvents,

   the amounts by weight of the components $d_1$ to $d_4$ in each case totalling 100% by weight.

2. Process for the preparation of a coating composition comprising a hydroxyl-containing, modified or unmodified polyester and/or a hydroxyl-containing epoxy resin and/or a hydroxyl-containing acrylate copolymer as well as a crosslinking agent reactive toward hydroxyl groups and a lubricant, the individual components being thoroughly mixed with one another, wherein a wax paste D is used as lubricant, which paste comprises

   $d_1$) 3 to 30% by weight of one or more polyolefin waxes and/or substituted polyolefin waxes

   $d_2$) 0 to 25% by weight of one or more melamine-formaldehyde resins

   $d_3$) 5 to 40% by weight of one or more acrylate resins having a hydroxyl value of 10 to 150 mg of KOH/g and a number average molecular weight of 2000 to 7000, and

   $d_4$) 10 to 80% by weight of one or more organic solvents,

   the amounts by weight of the components $d_1$ to $d_4$ in each case totalling 100% by weight.

3. The coating composition or the process as claimed in claim 1 or 2, wherein the coating composition comprises

   A) 10 to 60% by weight of one or more hydroxyl-containing, modified or unmodified polyesters and/or epoxy resins and/or acrylate copolymers

   B) 1 to 20% by weight of one or more aminoplast resins and/or one or more blocked diisocyanates or polyisocyanates

   C) 20 to 70% by weight of one or more organic solvents

   D) 0.8 to 8.0% by weight of the wax paste D

   E) 0 to 35% by weight of one or more pigments and

   F) 0 to 1% by weight of other auxiliaries and additives,

   the amounts by weight of the components A to F in each case totalling 100% by weight.

4. The coating composition or the process as claimed in any one of claims 1 to 3, wherein the wax paste D comprises

   $d_1$) 6 to 15% by weight of one or more polyolefin waxes and/or substituted polyolefin waxes

   $d_2$) 0 to 10% by weight of one or more melamine-formaldehyde resins

   $d_3$) 5 to 40% by weight of one or more acrylate resins having a hydroxyl value of 10 to 150 mg of KOH/g and a number average molecular weight of 2000 to 7000, and

   $d_4$) 10 to 80% by weight of one or more organic solvents,

   the amounts by weight of the components $d_1$ to $d_4$ in each case totalling 100% by weight.

5. The coating composition or the process as claimed in any one of claims 1 to 4, wherein the coating composition comprises no pigments and 3.0 to 6.0% by weight of the wax paste D.

6. The coating composition or the process as claimed in any one of claims 1 to 4, wherein the coating composition comprises 15 to 35% by weight of pigment and 1.5 to 3.0% by weight of the wax paste D.

7. The coating composition or the process as claimed in any one of claims 1 to 6, wherein the wax paste D comprises as the component $d_1$ one or more polyethylene waxes and/or polypropylene waxes and/or polytetrafluoroethylene waxes.

8. The coating composition or the process as claimed in any one of claims 1 to 6, wherein the wax paste D as the component $d_1$ comprises one or more polyethylene waxes.

9. Use of the coating compositions as claimed in claim 1 and any one of claims 3 to 8 for coating packaging containers.

10. Use of the coating compositions as claimed in claim 1 and any one of claims 3 to 8 as non-varnish exterior paint for the coating of deep-drawn cans.

**Revendications**

1. Masses de revêtement, contenant des polyesters comprenant des groupes hydroxyles, éventuellement modifiés, et/ou une résine époxy contenant des groupes hydroxyles et/ou un copolymère acrylique contenant des groupes hydroxyles ainsi qu'un agent réticulant réactif vis-à-vis des groupes hydroxyles et un agent lubrifiant, caractérisées en ce que l'on utilise comme agent lubrifiant une pâte de cire D, qui contient

$d_1$) de 3 à 30% en poids d'une ou de plusieurs cires de polyoléfines et/ou de cires de polyoléfines substituées,

$d_2$) de 0 à 25% en poids d'une ou de plusieurs résines mélamine-formaldéhyde,

$d_3$) de 5 à 40% en poids d'une ou de plusieurs résines acryliques ayant un indice OH de 10 à 150 mgKOH/g et un poids moléculaire de moyenne numérique de 2000 à 7000 et

$d_4$) de 10 à 80% en poids d'un ou de plusieurs solvants organiques,

la somme des proportions en poids des composants $d_1$ à $d_4$ se montant à chaque fois à 100% en poids.

2. Procédé de production d'une masse de revêtement, contenant des polyesters comprenant des groupes hydroxyles, éventuellement modifiés, et/ou une résine époxy contenant des groupes hydroxyles et/ou un copolymère acrylique contenant des groupes hydroxyles ainsi qu'un agent réticulant réactif vis-à-vis des groupes hydroxyles et un agent lubrifiant, dans lequel les composants individuels sont sujets à un mélange intensif, caractérisé en ce que l'on utilise en tant qu'agent lubrifiant une pâte de cire D, qui contient

$d_1$) de 3 à 30% en poids d'une ou de plusieurs cires de polyoléfines et/ou de cires de polyoléfines substituées,

$d_2$) de 0 à 25% en poids d'une ou de plusieurs résines mélamine-formaldéhyde,

$d_3$) de 5 à 40% en poids d'une ou de plusieurs résines acryliques ayant un indice OH de 10 à 150 mgKOH/g et un poids moléculaire de moyenne numérique de 2000 à 7000 et

$d_4$) de 10 à 80% en poids d'un ou de plusieurs solvants organiques,

la somme des proportions en poids des composants $d_1$ à $d_4$ se montant à chaque fois à 100% en poids.

3. Masse de revêtement ou procédé selon la revendication 1 ou 2, caractérisé(e) en ce que la masse de revêtement contient

A) de 10 à 60% en poids d'un ou de plusieurs polyesters, contenant des groupes hydroxyles, éventuellement modifiés, et/ou d'une résine époxy et/ou d'un copolymérisat acrylique,

B) de 1 à 20% en poids d'une ou plusieurs résines aminoplastes et/ou d'un ou plusieurs diisocyanates ou polyisocyanates bloqués,

C) de 20 à 70% en poids d'un ou de plusieurs solvants organiques,

D) de 0,8 à 8,0% en poids de la pâte de cire D,

E) de 0 à 35% en poids d'un ou de plusieurs pigments et

F) de 0 à 1% en poids d'adjuvants et d'additifs supplémentaires

la somme des proportions en poids des composants A à F se montant à chaque fois à 100% en poids.

4. Masse de revêtement ou procédé selon l'une quelconque des revendications 1 à 3, caractérisé(e) en ce que la pâte de cire D contient

$d_1$) de 6 à 15% en poids d'une ou de plusieurs cires de polyoléfines et/ou de cires de polyoléfines substituées,

$d_2$) de 0 à 10% en poids d'une ou de plusieurs résines mélamine-formaldéhyde,

$d_3$) de 5 à 40% en poids d'une ou de plusieurs résines acryliques ayant un indice OH de 10 à 150 mgKOH/g et un poids moléculaire de moyenne numérique de 2000 à 7000 et

$d_4$) de 10 à 80% en poids d'un ou de plusieurs solvants organiques,

la somme des proportions en poids des composants $d_1$ à $d_4$ se montant à chaque fois à 100% en poids.

5. Masse de revêtement ou procédé selon l'une quelconque des revendications 1 à 4, caractérisé(e) en ce que la masse de revêtement ne contient aucun pigment et contient de 3,0 à 6,0% en poids de pâte de cire D.

6. Masse de revêtement ou procédé selon l'une quelconque des revendications 1 à 4, caractérisé(e) en ce que la masse de revêtement contient de 15 à 35% en poids de pigment et de 1,5 à 3,0% en poids de pâte de cire D.

7. Masse de revêtement ou procédé selon l'une quelconque des revendications 1 à 6, caractérisé(e) en ce que la pâte de cire D contient en tant que composant $d_1$ une ou plusieurs cires de polyéthylène et/ou de polypropylène et/ou de polytétrafluoroéthylène.

8. Masse de revêtement ou procédé selon l'une quelconque des revendications 1 à 6, caractérisé(e) en ce que la pâte de cire D contient en tant que composant $d_1$ une ou plusieurs cires de polyéthylène.

9. Utilisation des masses de revêtement selon l'une quelconque des revendications 1 et 3 à 8 pour le revêtement d'emballages.

10. Utilisation des masses de revêtement selon l'une quelconque des revendications 1 et 3 à 8 en tant que laque externe sans vernis pour le revêtement de boites embouties.